# EUROPEAN PATENT APPLICATION

(11) **EP 1 418 138 A1**
(43) Date of publication of application: **12.05.2004**
(21) Application number: 03008550.0
(22) Date of filing: 14.04.2003
(51) Int. Cl.: B65G 13/071

(54) **Clutch coupling for the rollers of a roller conveyor**

(30) Priority: 05.11.2002 IT TO20020948
(71) Applicant: Emmegi Sistemi S.r.l., 10090 Bruino (TO) (IT)
(72) Inventor: Biancotto, Massino, 10043 Orbassano (TO) (IT)
(74) Representative: Lotti, Giorgio

(57) **Abstract**

A clutch coupling for the rollers of a roller conveyor comprises actuating means for actuating the conveyor, said actuating means being provided with means for transmitting motion to the shaft (8) of each roller (6). Said clutch coupling is set between the means for transmitting motion (15,50) and the shaft (8) of each roller and is made up of a bushing element (20), which is provided with connection means (18,51) for connection to the transmission means and is designed to rotate on and with respect to one end (22) of the shaft of the roller, by means of a pair of ball bearings (24,25), which are inserted in said bushing and can be translated on said end (22) so as to move towards one another in response to the action of an elastic element (38,144), which is designed to act upon one of the races of each ball bearing.

## Description

The present invention relates to a clutch coupling for driving in rotation a shaft or the like by means of a motor member, and, more in particular, to a clutch-coupling,system that enables a roller of a roller conveyor to be stopped in the presence of an action which interrupts conveyance of an object carried by the conveyor.

Roller conveyors are known to the art and consist of one or more motor-driven rollers, which support and guide a pallet or a supporting platform for supporting a workpiece along a path defined by the supporting structure of the rollers. When the above conveyors are used on a machining line for transporting a workpiece from one station to another, it is necessary for the workpiece to be stopped for a certain interval of time, i.e., the machining time, at the various stations along the line.

For the above purpose, each coupling between the roller and the control over transmission of motion from a motor mounted on the conveyor is provided with a clutch of an automatic type. The said clutch enables arrest of the roller in the presence of a resisting torque, applied on the roller, greater than the torque that the clutch can transmit without there occurring a relative sliding between the driven part and the driving part. In this way, it is possible to obtain arrest of the various pieces during machining, whilst the roller conveyor carries on working, driving in rotation all the other rollers which are not subject to the increase in resistant torque and which, consequently, carry on conveying the loaded objects along the machining line.

Known clutches, used in conveyors of the above type, are friction clutches, which use one or more discs of appropriate material, usually plastic material. They are pressed one against the other by an elastic element, the thrust of which can be adjusted manually, so as to obtain transmission of the desired torque. An example of such a clutch is provided by the international patent application WO81/01546.

The above type of clutch coupling presents, however, the disadvantage of overheating when the workpiece has to remain stationary for a relatively long time. Furthermore, with heating there is an excessive consumption of the material of the discs so that it is necessary to proceed to a new adjustment of the load of the elastic element of the clutch.

The purpose of the present invention is to provide a clutch coupling that will overcome the aforesaid problems.

This purpose is achieved by a clutch coupling that presents the characteristics specified in Claim 1.

Further characteristics and advantages will emerge clearly from the ensuing description, with reference to the attached drawings, which are provided merely by way of non-limiting example and in which:
- Figure 1 is a plan view of a roller conveyor, of the type in which a clutch coupling according to the invention can be installed;
- Figure 2 is a cross-sectional view of a clutch coupling according to the invention, which is mounted on a system for transmitting motion between the transmission shaft and the shaft of the conveying roller, said system being obtained with a crown wheel and pinion;

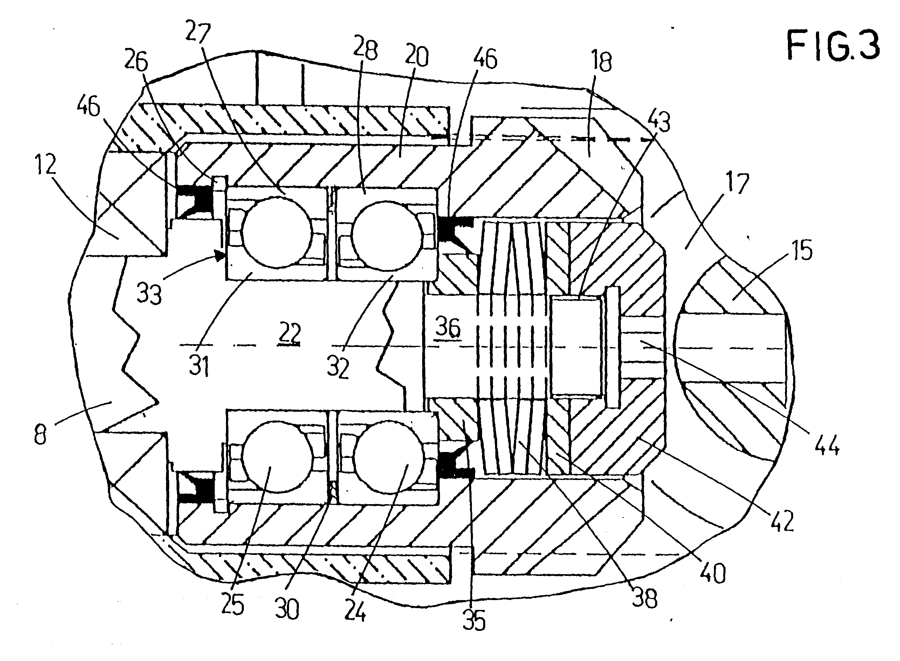

- Figure 3 is an enlarged view of the clutch coupling of Figure 2;
- Figure 4 is a cross-sectional view of the coupling according to the invention mounted on a system for transmitting motion between the transmission shaft and the shaft of the conveying roller, said system being obtained with a chain and crown wheel; and
- Figure 5 is a cross-sectional view of the clutch coupling according to the invention provided between the shaft and the ???small roller of the conveyor roller.

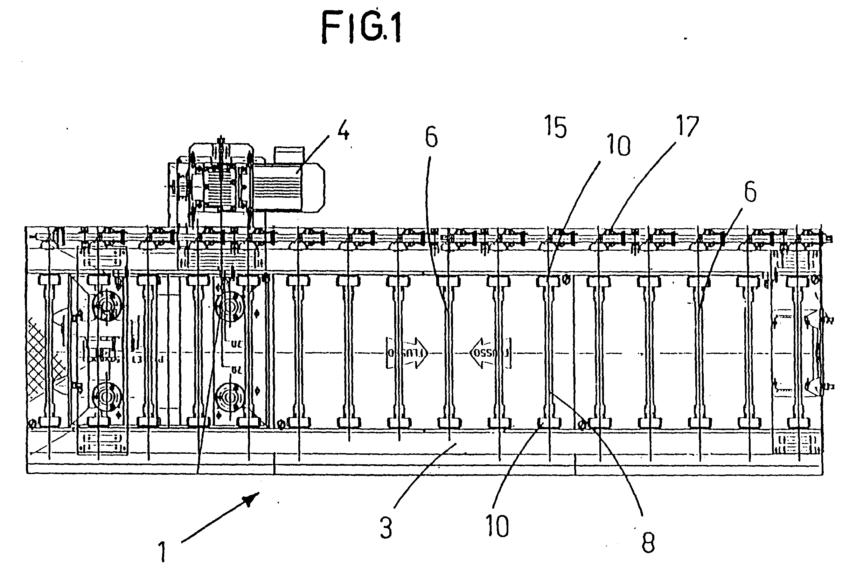

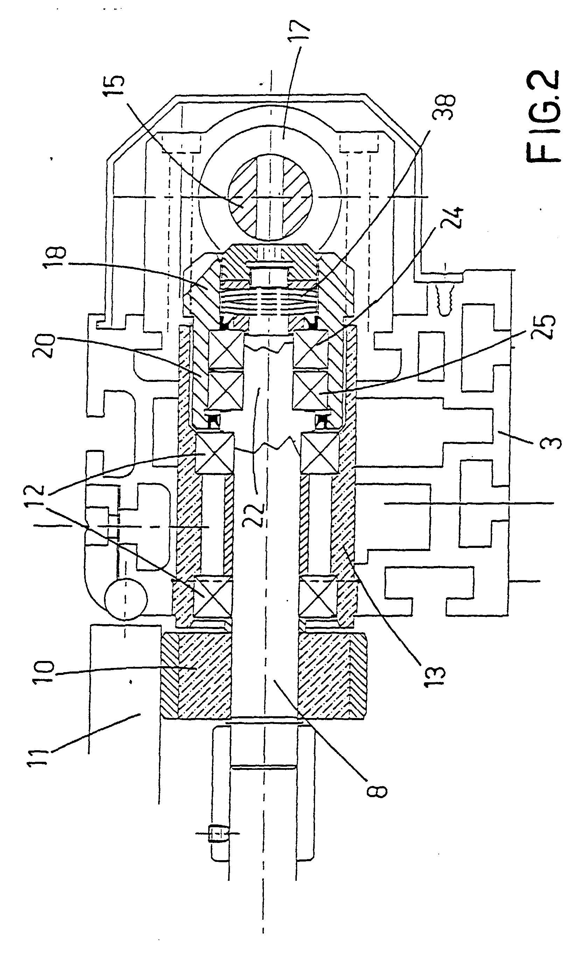

With reference to the figures, the reference number 1 designates, as a whole, a roller conveyor provided with a supporting frame 3 and an electric motor 4 for moving the rollers 6. In the embodiment illustrated, said rollers 6 are made up of a shaft 8, which carries fixed in the proximity of its ends two small rollers 10, which are designed to support and guide the workpieces 11 carried along by the conveyor 1. Furthermore, the shaft 8 is designed to rotate on bearings 12 housed on a support 13 fixed on the frame 3 (see Figures 2, 4 and 5). Motion of the motor 4 is transmitted to the rollers, in particular in the embodiment illustrated in Figure 1, by a shaft 15, which is provided, at pre-set distances, with as many gears 17 of the crown-wheel-and-pinion assembly as are the rollers to be controlled. The second gear 18 of the various crown-wheel-and-pinion assemblies is obtained in a metal bushing 20 which surrounds coaxially the end 22 of the shaft 8 of the roller.

The bushing 20 is free to rotate on the shaft 8 by means of two ball bearings 24 and 25 of the angular type, i.e., ones designed to support loads of an axial type, the said ball bearings being fixed in the bushing by means of a Seger ring 26 against a contrast 27. The ball bearings are moreover inserted on the end 22 of the shaft 8, which, in order to reduce the size of the ball bearings 24 and 25, may be made with a diameter smaller than that of the rest of the shaft. The ball bearings face one another in a specular arrangement, and the external races 27 and 28 are not set bearing upon one another but are spaced apart by a spacer ring 30 pinched between them. Of the two internal races 31 and 32 of the ball bearings, the race 31 bears upon a shoulder 33 of the shaft 8, which results from the fact that it has a reduced diameter of the end 22, whilst the other is in contact with a spacer ring 35, set coaxial to the end part 36 of the end 22, which has a further reduced diameter. The two internal races 31 and 32 are not in contact with one another, but are spaced apart by an amount corresponding to the thickness of the spacer 30 set between the two external races. Consequently, said internal races are free to translate towards one another on the end 22 and to exert an axial thrust, equal and opposite, on the respective balls of the bearings. Said thrust can be exerted, for example, by means of Belleville springs 38 compressed between the spacer ring 35 and a washer 40, the axial position of which on the end part 36 is controlled by an adjusting ring nut 43. Said ring nut can be screwed on a thread 43 obtained on said end part 36, by means of a hexagonal hole 44 for insertion of an Allen wrench (not illustrated). Of course, between the bushing 20 and the end 22 there are set sealing elements 46 for preventing leakage of the lubricant from the bearings. In order to reduce production costs, the external races of the ball bearings can be made of a single piece, while keeping the internal races separate, since they must be free to slide against one another when they are compressed between the shoulder 33 and the spacer ring 35.

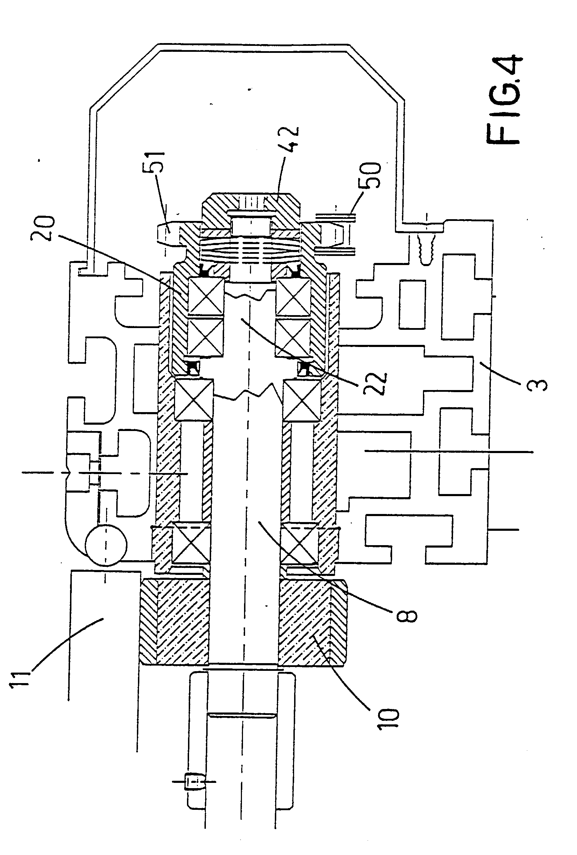

Figure 4 illustrates a further embodiment of the invention, in which the variation as compared to the previous one consists in the system for transmission of motion from the motor to the bushing 20. The transmission is obtained by means of a chain 50 and a crown wheel 51 fixed to the bushing 20.

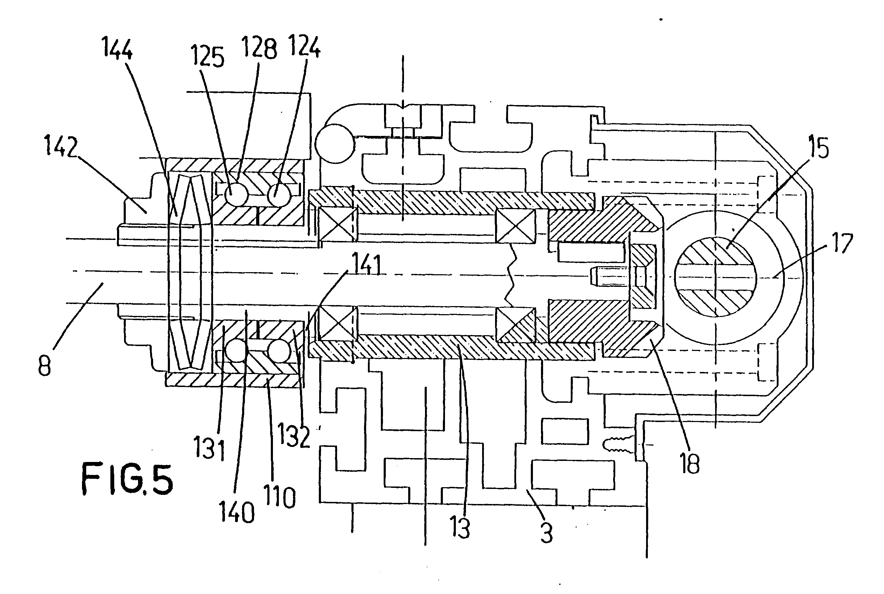

In the embodiment illustrated in Figure 5, parts that are the same as the ones of the previous embodiments are designated by the same reference numbers. The clutch coupling is made with the same elements as for the embodiment of Figure 2, but in this case it is the small roller 110 which is free to rotate on the shaft 8, with the interposition of a pair of angular ball bearings 124 and 125 set facing one another. In the embodiment illustrated, the external race 128 fixed to the small roller 110 is not made of two parts separated by a spacer, but is made of a single piece and with a width greater than the sum of the widths of the two internal races 131 and 132 in such a way that between said internal races there is a free space. The ball bearings are slidably inserted on a bushing 140 provided with a contrast edge 142 at one of its ends. The other end of the bushing 140 is threaded so as to receive an adjusting ring nut 142, which can be used for adjusting the pressure exerted by Belleville springs 144 on the internal races 131 and 132 of said ball bearings 124 and 125, said Belleville springs being set between the ring nut and the ball bearings.

Operation of the coupling according to the invention is quite evident. In order to enable the rollers to be free to stop with respect to the transmission of motion of the motor, when a resistant torque is applied to the object transported thereon, it is sufficient to adjust the pressure exerted by the Belleville springs 38, 144 on the internal races 31, 32, 131, 132 and, from these, on the balls of the ball bearings, by acting on the adjusting ring nuts 42, 142. The increase in pressure will lead to an increase in the torque transmitted from the motor to the shafts, via the ball bearings and vice versa. It will be possible, that is, to vary the resistance to arrest of the rollers by acting only on the adjusting ring nuts 42, 142. Wear will be absolutely negligible, since the ball bearings are built in such a way as to resist axial loads, and no overheating will at all be present. Consequently, all the drawbacks affecting the clutch couplings known to the prior art will be overcome.

It remains understood that the shapes and sizes of the couplings, as well as the materials used, may be varied, if need be, without thereby departing from the scope of the present invention as defined in the ensuing claims.

## Claims

1. A clutch coupling for the rollers of a roller conveyor, which is set between the means for transmission of motion (15, 50) of the actuating means for driving the conveyor and the shaft (8) of the rollers (6), **characterized in that** it is made up of a bushing element (20), which is provided with connection means (18, 51) for connection to the transmission means and is designed to rotate on and with respect to one end (22) of each shaft of the roller, by means of a pair of ball bearings (24, 25) fixed in said bushing, between a contrast (33) obtained on the end of the shaft and a spacer on which there acts an elastic element (38, 144) set on the bushing, the ball bearings (24, 25) being translatable on said end (22) so as to move towards one another in response to the action of thrust of the elastic element (38, 144), which is designed to act upon one of the races of each ball bearing.

2. The clutch coupling according to Claim 1, **characterized in that** the ball bearings (24, 25) are of the angular type and are set facing to one another in specular fashion.

3. The clutch coupling according to Claims 1 and 2, **characterized in that** set between the races of each ball bearing that are not subject to the action of thrust of the elastic element (38, 144) is a spacer (30).

4. The clutch coupling according to Claim 1, **characterized in that** the elastic element is made up of Belleville springs controlled by a ring nut (42, 142) which can be screwed on said end (22) of the shaft (8).

5. The clutch coupling according to Claim 1, **characterized in that** the means for transmitting motion (15, 50) are coupled to the bushing (20) by means of a crown-wheel-and-pinion assembly.

6. The clutch coupling according to Claim 1, **characterized in that** the means for transmitting motion (15, 50) are coupled to the bushing (20) by means of a chain and a crown wheel.

7. The clutch coupling for the rollers of a roller conveyor, comprising actuating means provided with means for transmitting motion to the shaft (8) of the rollers (6), **characterized in that** said clutch coupling is set between the shaft (8) of the rollers (6) and one of the small rollers (110) of the rollers and is made up of a bushing element (140), which is provided with connection means in rotation ???about the shaft (8) and is designed to carry a pair of ball bearings (124, 125), which are inserted between a contrast (141) made on the bushing element and an elastic element (144) and can be translated thereon so as to move towards one another in response to the action of said elastic element (144), which is designed to act upon one of the internal races of each ball bearing, the external races of said ball bearings, which are separated by a spacer, being fixed within one of the small rollers (110) of the roller (6).
